# EUROPÄISCHE PATENTANMELDUNG

(11) **EP 1 422 401 A2**
(43) Veröffentlichungstag der Anmeldung: **26.05.2004**
(21) Anmeldenummer: 03025934.5
(22) Anmeldetag: 13.11.2003
(51) Int. Cl.: F02C 6/12, F02C 7/24

(54) **Sekundärluftlader**

(30) Priorität: 25.11.2002 DE 10254859
(71) Anmelder: Mann + Hummel GmbH, 71638 Ludwigsburg (DE)
(72) Erfinder: Hummel, Karl Ernst, 74321 Bietigheim-Bissingen (DE)
(74) Vertreter: Riedel, Peter

(57) **Zusammenfassung**

Die Erfindung betrifft einen Sekundärluftlader (1) für einen Verbrennungsmotor eines Kraftfahrzeuges. Der Sekundärluftlader (1) weist eine Turbine (2) und einen Verdichter (3) auf. Ein Turbinenrad (4) der Turbine (2) und ein Verdichterrad (5) des Verdichters (3) sind auf einer gemeinsamen Welle (6) in einem Gehäuse (7) des Turboladers (1) mittels einer Lagerung (8) drehbar gelagert. Die Welle (6) ist mittels mindestens einem Wälzlager (17) gelagert. Zumindest ein Teil des Gehäuses (7) ist außenseitig im Bereich der Lagerung (8) mit einem Dämmaterial (9) zur Schalldämmung umschlossen.

## Beschreibung

Die Erfindung betrifft einen Sekundärluftlader für einen Verbrennungsmotor eines Kraftfahrzeuges mit den Merkmalen nach dem Oberbegriff des Anspruchs 1.

Turbolader bestehen in der Regel aus zwei Strömungsmaschinen, nämlich einer Turbine und einem Verdichter, die auf einer gemeinsamen Welle angeordnet sind. Die Turbine wird von einem aufgrund einer Druckdifferenz erzeugten Luft- oder Gasstrom beaufschlagt und treibt somit den Verdichter an, der Luft ansaugt und diese vorverdichtet. Die Lagerung der Welle erfolgt üblicherweise mittels ölgeschmierten Gleitlagern.

Zur Vermeidung der Probleme beim Kaltstart und in einer Warmlaufphase von Verbrennungsmotoren in Kraftfahrzeugen sind diese mit einem als Turbolader ausgebildeten Sekundärluftlader versehen. Die Turbine des Sekundärluftladers wird beispielsweise über die Druckdifferenz an einer Drosselklappe in einem Ansaugkanal des Verbrennungsmotors angetrieben. Die Turbine ihrerseits treibt den Verdichter an, mittels dessen ein Frischluftstrom in die Abgasanlage des Verbrennungsmotors gefördert wird. Der Sauerstoffgehalt im Frischluftstrom führt in der Abgasanlage zu einer Oxidation der Schadstoffe. Neben der damit erzielten Reinigungswirkung führt die bei der Oxidation frei werdende Wärmeenergie zu einer beschleunigten Aufheizung des Katalysators auf die gewünschte Betriebstemperatur.

Bei zunehmend komplexer werdenden Systemen mit unerwünscht hohem Systemgewicht und bei nur eingeschränkt zur Verfügung stehendem Bauraum im Motorraum muß ein geeigneter Sekundärluftlader klein und leicht ausgeführt sein. Für eine entsprechend gute Wirksamkeit ist dabei eine Auslegung für einen Betrieb auf einem hohen Drehzahlniveau erforderlich, mit dem eine unerwünscht hohe Geräuschemission einhergeht. Außerdem sollte der Lader von einer Fremdschmierung für das Wellenlager unabhängig sein.

Der Erfindung liegt die Aufgabe zugrunde, einen gattungsgemäßen Sekundärluftlader derart weiterzubilden, daß bei kompakter und leichtgewichtiger Bauweise ein Betrieb mit vermindertem Geräuschpegel ermöglicht ist.

Diese Aufgabe wird durch einen Sekundärluftlader mit den Merkmalen des Anspruchs 1 gelöst.

Dazu wird erfindungsgemäß ein Sekundärluftlader vorgeschlagen, dessen Welle mittels mindestens einem Wälzlager gelagert ist und bei dem zumindest ein Teil seines Gehäuses außenseitig im Bereich der Lagerung mit einem Dämmaterial zur Schalldämmung umschlossen ist. Von Turboladern geht eine beträchtliche Schallentwicklung aus. Dies ist insbesondere der Fall, wenn die gemeinsame Welle mittels Wälzlagern gelagert ist, welche bei Sekundärluftladern bevorzugt zum Einsatz kommen. Es hat sich nun gezeigt, daß durch eine außenseitige Anbringung eines Dämmaterials zumindest im Bereich der Wälzlagerung eine hoch wirksame Schalldämmung zu erzielen ist. Das Gehäuse des Turboladers kann dabei die Turbine, den Verdichter und die Lagerung eng umschließen sowie dünnwandig ausgebildet sein. Es ergibt sich eine platz- und gewichtsparende Bauweise. Wegen der meist komplexen äußeren Formgebung des Gehäuses kann das Dämmaterial vorrangig in entsprechende Vertiefungen angeordnet sein, wodurch seitens des Dämmaterials kein wesentlich erhöhter Bauraum erforderlich ist. Vorhandene Laderausführungen können ohne konstruktive Änderungen hinsichtlich der erfindungsgemäßen schallgedämmten Ausführung nachgerüstet werden.

Nähere Untersuchungen haben gezeigt, daß als Schallquelle vor allem das Wellenlager in Betracht kommt. Die Anordnung eines Sekundärluftladers abseits vom Motorölkreislauf führt zu einer Ausbildung der Lagerung mit lebensdauergeschmierten Wälzlagern, beispielsweise Kugellagern, deren Abrollgeräusch wesentlich zur Geräuschentwicklung beiträgt. Eine überraschend signifikante Senkung des Geräuschpegels ergibt sich bei einer vorteilhaften Weiterbildung, bei der das Gehäuse im Bereich der Lagerung mit dem Dämmaterial umschlossen ist. Insbesondere bei einer Ausbildung des Gehäuses mit einem im Bereich der Lagerung geringeren Durchmesser als im Bereich der Turbine und des Verdichters ist es zweckmäßig, den Bereich der Lagerung zwischen der Turbine und dem Verdichter liegend mit Dämmaterial zu umschließen. Neben einer wirkungsvollen Dämmung der Lagergeräusche ergibt sich zumindest teilweise auch eine Dämmung der Turbinen- und Verdichtergeräusche. Durch Auffüllen des Zwischenraumes zwischen Turbine und Verdichter mit dem Dämmaterial vergrößert sich nicht die Gesamtkontur des Turboladers, in dessen Folge kein zusätzlicher Bauraum erforderlich ist.

In vorteilhaften Weiterbildungen ist das Gehäuse im Bereich der Turbine bzw. im Bereich des Verdichters mit dem Dämmaterial umschlossen. Es hat sich gezeigt, daß neben den Lagergeräuschen auch die aerodynamischen Geräusche der hochdrehenden Turbine bzw. des Verdichters einen bedeutsamen Anteil am Betriebsgeräusch des Turboladers ausmachen. Die außenseitig umschließende Anordnung eines Dämmaterials in diesem Bereich trägt auch bei dünnwandiger Ausbildung des Gehäuses zur signifikanten Senkung des Geräuschpegels bei.

In einer vorteilhaften Weiterbildung ist das Gehäuse zumindest näherungsweise vollständig im Bereich der Lagerung, der Turbine und des Verdichters mit Dämmaterial umschlossen. Es entsteht eine zumindest näherungsweise vollständige außenseitige Kapselung des gesamten Laders. Die Außenkontur des Dämmmaterials braucht dabei nur geringfügig größer als die Außenkontur des Gehäuses sein. Aus der komplexen äußeren Gestalt ergeben sich dennoch eine Vielzahl von mit Dämmaterial auszufüllenden Volumina. Bei hoher Dämmwirkung ist die Außenkontur und damit der erforderliche Bauraum nicht wesentlich erhöht.

Allen erfindungsgemäßen Ausführungsformen ist gemein, daß neben der eigentlichen Dämmwirkung durch das Dämmaterial, bei dem Schallenergie im Material selbst dissipiert wird, das Dämmaterial auch Eigenschwingungen von Gehäusewandteilen vermeidet. Das Gehäuse des Turboladers kann damit sehr dünnwandig und in materialsparender Weise leichtgewichtig ausgeführt sein, ohne daß den Schallpegel erhöhende Wandschwingungen entstehen.

Als geeignetes Dämmaterial hat sich ein PU-(Polyurethan-) Schaum herausgestellt. Zweckmäßig ist dabei der PU-Schaum mit schalldämmenden Füllstoffen versehen. Ein derartiger Schaum ist bei guter Dämmwirkung mit einfachem und kostengünstigem Werkzeug leicht zu verarbeiten. Alternativ kommen als Dämmaterial auch Glasfasern und/oder Mineralfasern wie Steinwolle oder dgl. in Frage.

In einer vorteilhaften Weiterbildung ist das Dämmaterial außenseitig von einer Schale umschlossen. Die Schale kann dabei eine zusätzliche Dämmwirkung erzielen. Im übrigen schützt die Schale das unter Umständen weiche Dämmaterial gegen mechanische Beschädigungen. Zweckmäßig ist dabei die Schale auch als Spritzform zum Einspritzen des PU-Schaums vorgesehen. Die Schale geht dabei beim Aushärten des PU-Schaumes mit diesem eine feste Verbindung ein und dient damit als "verlorene" Form. Im Sinne einer Kostenersparnis ist dabei kein zusätzliches Formwerkzeug erforderlich. Alternativ kann es auch zweckmäßig sein, ohne Schale den Turbolader in ein geeignetes Formwerkzeug einzulegen und entsprechend mit PU-Material zu umschäumen.

Die Schale umfaßt vorteilhaft zwei miteinander verbindbare Halbschalen, wodurch sich eine leichte Montierbarkeit am fertig aufgebauten Turbolader ergibt. Die beiden Halbschalen sind dabei insbesondere einteilig ausgebildet und weisen im Bereich einer Trennlinie ein Folienscharnier sowie im Bereich einer gegenüberliegenden Trennlinie mindestens einen Schnappverbinder auf. Dabei hat sich eine Ausbildung der Schale aus Kunststoff, insbesondere auf dem Wege des Spritzgießens, als zweckmäßig herausgestellt. Es ergibt sich eine leichte, sowohl manuell als auch automatisch durchführbare Montage, indem die geöffneten Halbschalen mittels des Folienscharniers um das Gehäuse des Laders zusammengeklappt und mit den Schnappverbindern verschlossen werden. Das Folienscharnier bildet dabei ohne zusätzlichen Aufwand eine Dichtung gegen austretenden PU-Schaum.

Ausführungsbeispiele der Erfindung werden im Folgenden anhand der Zeichnung näher beschrieben. Es zeigen:
- Fig. 1: in schematischer, teilweise geschnittener Ansicht einen als Sekundärluftlader vorgesehenen Turbolader mit einer zwischen der Turbine und dem Verdichter liegenden, den Bereich der Lagerung umschließenden Umschäumung,
- Fig. 2: die Anordnung nach Fig. 1 in einer Außenansicht mit Einzelheiten einer das Dämmaterial umschließenden Schale,
- Fig. 3: in einer Querschnittsdarstellung die Schale nach Fig. 2,
- Fig. 4: in einer teilweise geschnittenen Darstellung eine Variante der Anordnung nach Fig. 1 mit einem das Gehäuse des Laders zumindest näherungsweise vollständig umschließenden Dämmaterial,
- Fig. 5: in einer Außenansicht die Anordnung nach Fig. 4 mit Einzelheiten der das Dämmaterial umschließenden Schale.

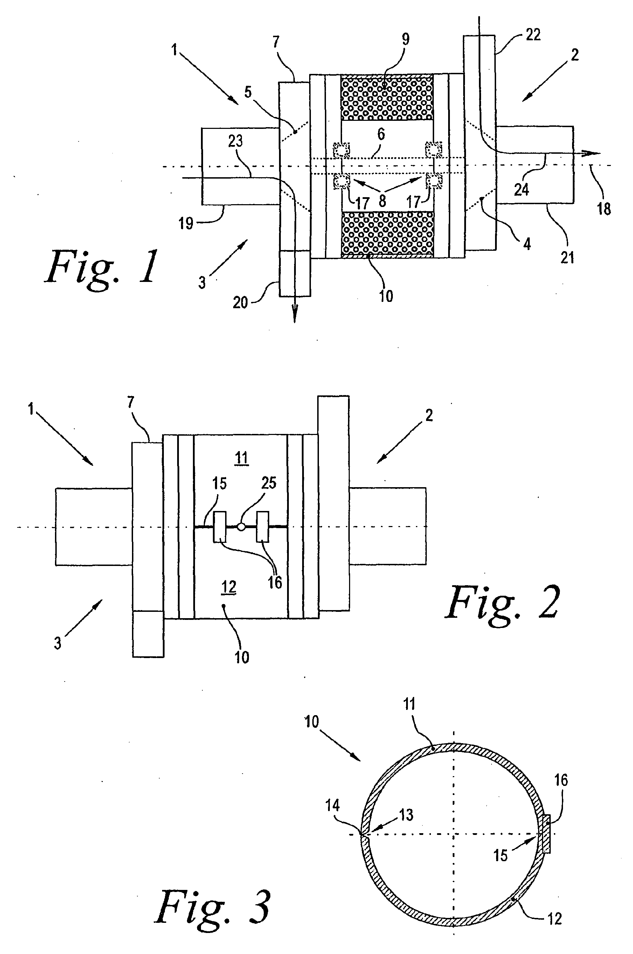

Fig. 1 zeigt in schematischer, teilweise geschnittener Darstellung einen Sekundärluftlader 1 für einen Verbrennungsmotor eines Kraftfahrzeuges mit einer Turbine 2, einem Verdichter 3 und einem Gehäuse 7. Gestrichelt dargestellt sind im Gehäuse 7 ein Turbinenrad 4 der Turbine 2, ein Verdichterrad 5 des Verdichters 3, eine Welle 6 sowie eine Lagerung 8 angeordnet. Das Turbinenrad 4 und das Verdichterrad 5 sind auf der gemeinsamen Welle 6 mittels der Lagerung 8 um eine Drehachse 18 drehbar gelagert. Die Lagerung 8 ist im gezeigten Ausführungsbeispiel durch zwei lebensdauergeschmierte Kugellager 17 gebildet.

Das Gehäuse 7 umschließt im Bereich der Turbine 2 das Turbinenrad 4, im Bereich des Verdichters 3 das Verdichterrad 5 sowie im Bereich der Lagerung 8 die Kugellager 17 und die Welle 6. Des weiteren weist das Gehäuse 7 im Bereich der Turbine 2 einen Einblasstutzen 22 sowie einen Auslaßstutzen 21 auf. Im Bereich des Verdichters 3 ist am Gehäuse 7 ein Einlaßstutzen 19 sowie ein Ausblasstutzen 20 vorgesehen. Die Turbine 2 ist mit einem nicht dargestellten Ansaugkanal des ebenfalls nicht dargestellten Verbrennungsmotors derart verbunden, daß mittels einer an einer Drosselklappe entstehenden Druckdifferenz ein Zweigluftstrom etwa entlang des Pfeiles 24 die Turbine 2 durchströmt und dabei das Turbinenrad 4 drehend antreibt. Die Drehung des Turbinenrades 4 wird über die Welle 6 auf das Verdichterrad 5 übertragen, wodurch ein Sekundärluftstrom etwa entlang des Pfeiles 23 durch den Einlaßstutzen 19 angesaugt und aus dem Ausblasstutzen 20 in Richtung einer nicht dargestellten Abgasanlage gefördert wird.

Ein Teil des Gehäuses 7 ist außenseitig mit einem Dämmaterial 9 zur Schalldämmung versehen. Das Gehäuse 7 weist im Bereich der Lagerung 8 einen geringeren Durchmesser auf als im Bereich der Turbine 2 und des Verdichters 3. Das Gehäuse 7 ist im Bereich der Lagerung 8 zwischen der Turbine 2 und dem Verdichter 3 liegend mit dem Dämmaterial 9 umschlossen. Das Dämmaterial 9 ist seinerseits außenseitig von einer ringförmigen, zwischen der Turbine 2 und dem Verdichter 3 liegenden Schale 10 umschlossen.

Das Dämmaterial 9 ist im gezeigten Ausführungsbeispiel ein Polyurethan-Schaum, der mit schalldämmenden Füllstoffen versehen ist. Es kann auch ein Dämmaterial 9 vorgesehen sein, welches Glasfasern und/oder Mineralfasern enthält.

Fig. 2 zeigt in einer Außenansicht die Anordnung nach Fig. 1, demnach die Schale 10 aus zwei Halbschalen 11, 12 gebildet ist. Die beiden Halbschalen 11, 12 sind entlang einer Trennlinie 15 mittels Schnappverbindern 16 verbunden. Im Bereich der Trennlinie 15 ist eine Einspritzöffnung 25 zum Einspritzen des PU-Schaumes als Dämmaterial 9 (Fig. 1) vorgesehen. Die Schale 10 dient dabei als "verlorene" Spritzform zum Einspritzen des PU-Schaumes.

Fig. 3 zeigt in einer Querschnittsdarstellung Einzelheiten der Schale 10 nach den Fig. 1 und 2. Die beiden Halbschalen 11, 12 sind einteilig ausgebildet und im Bereich einer der Trennlinie 15 gegenüberliegenden Trennlinie 13 über ein Folienscharnier 14 schwenkbar miteinander verbunden. Die beiden Halbschalen 11, 12, das Folienscharnier 14 sowie die Schnappverbinder 16 sind einteilig aus Kunststoff auf dem Wege des Spritzgießens gebildet. Im geöffneten Zustand der Schnappverbinder 16 sind die beiden Halbschalen 11, 12 gegeneinander verschwenkbar. Im aufgeklappten Zustand lassen sich die beiden Halbschalen 11, 12 um das Gehäuse 7 des Sekundärluftladers 1 (Fig. 1 und 2) führen. Beim Zusammenschwenken der beiden Halbschalen 11, 12 und Verschließen der Schnappverbinder 16 entsteht eine im wesentlichen dichte, den Bereich der Lagerung 8 (Fig. 1) umschließende Spritzform für den PU-Schaum.

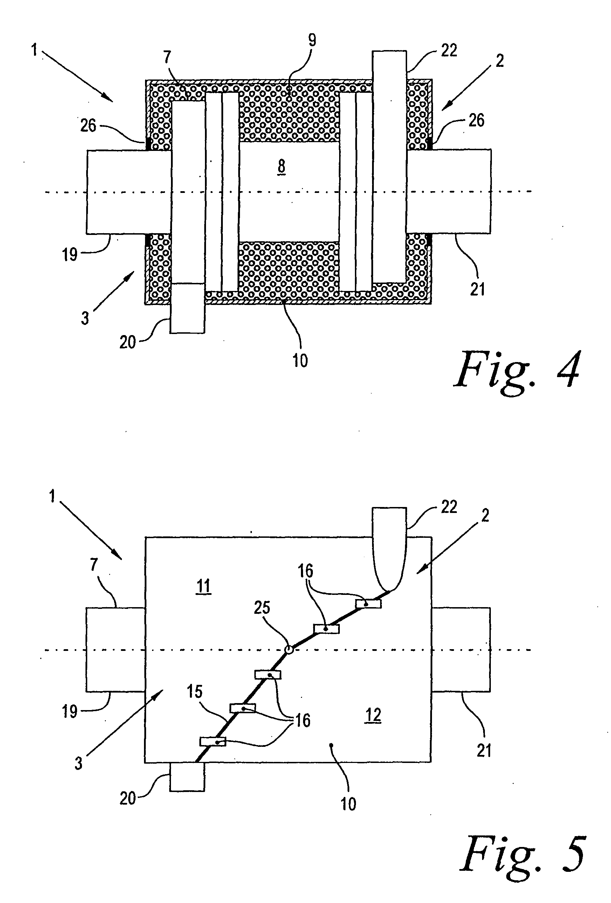

Fig. 4 zeigt in schematischer, teilweise geschnittener Darstellung eine Variante der Anordnung nach den Fig. 1 bis 3, bei der das Gehäuse 7 zumindest näherungsweise vollständig im Bereich der Lagerung 8, der Turbine 2 und des Verdichters 3 mit dem Dämmaterial 9 umschlossen ist. Das Dämmaterial 9 ist radial außenseitig und auch stirnseitig mit einer entsprechend geformten, im wesentlichen zylindrischen Schale 10 umschlossen. Dabei ragen aus dem Dämmaterial 9 bzw. der Schale 10 lediglich der Einlaßstutzen 19, der Ausblasstutzen 20, der Auslaßstutzen 21 und der Einblasstutzen 22 heraus. Zur Abdichtung der Schale 10 gegen den Einblasstutzen 19 und den Auslaßstutzen 21 sind entsprechende ringförmige Dichtungen 26 vorgesehen.

Fig. 5 zeigt in einer Außenansicht die Anordnung nach Fig. 4, demnach die beiden Halbschalen 11, 12 entlang einer diagonal und winklig vom Ausblasstutzen 20 zum Einblasstutzen 22 verlaufenden Trennlinie 15 mittels einer Anzahl von Schnappverbindern 16 verbunden sind.

In den übrigen Merkmalen und Bezugszeichen stimmt die Anordnung nach den Fig. 4 und 5 mit der Anordnung nach den Fig. 1 bis 3 überein.

## Patentansprüche

1. Sekundärluftlader (1) für einen Verbrennungsmotor eines Kraftfahrzeuges mit einer Turbine (2) und einem Verdichter (3), wobei ein Turbinenrad (4) der Turbine (2) und ein Verdichterrad (5) des Verdichters (3) auf einer gemeinsamen Welle (6) in einem Gehäuse (7) des Turboladers (1) mittels einer Lagerung (8) drehbar gelagert sind,
**dadurch gekennzeichnet, daß** die Welle (6) mittels mindestens einem Wälzlager (17) gelagert ist und daß zumindest ein Teil des Gehäuses (7) außenseitig im Bereich der Lagerung (8) mit einem Dämmaterial (9) zur Schalldämmung umschlossen ist.

2. Turbolader nach Anspruch 1,
**dadurch gekennzeichnet, daß** das Gehäuse im Bereich der Lagerung (8) einen geringeren Durchmesser aufweist als im Bereich der Turbine (2) und des Verdichters (3), wobei der zwischen der Turbine (2) und dem Verdichter (3) liegende Bereich der Lagerung (3) von dem Dämmaterial (9) umschlossen ist.

3. Turbolader nach Anspruch 1 oder 2,
**dadurch gekennzeichnet, daß** das Gehäuse (7) zumindest näherungsweise vollständig im Bereich der Lagerung (8), der Turbine (2) und des Verdichters (3) mit dem Dämmaterial (9) umschlossen ist.

4. Turbolader nach einem der Ansprüche 1 bis 3,
**dadurch gekennzeichnet, daß** das Dämmaterial (9) ein PU-Schaum ist.

5. Turbolader nach Anspruch 4,
**dadurch gekennzeichnet, daß** der PU-Schaum mit schalldämmenden Füllstoffen versehen ist.

6. Turbolader nach einem der Ansprüche 1 bis 5,
**dadurch gekennzeichnet, daß** das Dämmaterial (9) Glasfasern und/oder Mineralfasern enthält.

7. Turbolader nach einem der Ansprüche 1 bis 6,
**dadurch gekennzeichnet, daß** das Dämmaterial (9) außenseitig von einer Schale (10) umschlossen ist.

8. Turbolader nach Anspruch 7,
**dadurch gekennzeichnet, daß** die Schale (10) als Spritzform ,zum Einspritzen des PU-Schaums vorgesehen ist.

9. Turbolader nach Anspruch 7 oder 8,
**dadurch gekennzeichnet, daß** die Schale (10) zwei miteinander verbindbare Halbschalen (11, 12) umfaßt.

10. Turbolader nach Anspruch 9,
**dadurch gekennzeichnet, daß** die beiden Halbschalen (11, 12) einteilig aus spritzgegossenem Kunststoff ausgebildet sind und im Bereich einer Trennlinie (13) ein Folienscharnier (14) sowie im Bereich einer gegenüberliegenden Trennlinie (15) mindestens einen Schnappverbinder (16) aufweisen.
